# EUROPEAN PATENT SPECIFICATION

(11) **EP 3 275 092 B1**
(45) Date of publication and mention of the grant of the patent: **23.10.2019**
(21) Application number: 16714016.9
(22) Date of filing: 25.03.2016
(51) Int. Cl.: H04B 7/04, H04B 7/06

(54) **SYSTEMS AND METHODS FOR SELECTING BEAM-REFERENCE SIGNALS FOR CHANNEL-STATE INFORMATION REFERENCE-SIGNAL TRANSMISSION**
SYSTEME UND VERFAHREN ZUR AUSWAHL VON STRAHLREFERENZSIGNALEN ZUR ÜBERTRAGUNG VON KANALSTATUSINFORMATIONSREFERENZSIGNALEN
SYSTÈMES ET PROCÉDÉS DE SÉLECTION DE SIGNAUX DE RÉFÉRENCE DE FAISCEAUX POUR LA TRANSMISSION DE SIGNAUX DE RÉFÉRENCE D'INFORMATIONS D'ÉTAT DE CANAL

(30) Priority: 27.03.2015 US 201562139300 P
(43) Date of publication of application: 31.01.2018
(73) Proprietor: Telefonaktiebolaget LM Ericsson (PUBL), 164 83 Stockholm (SE)
(72) Inventor: FRENNE, Mattias, SE-754 43 Uppsala (SE); ANDERSSON, Håkan, SE-585 99 Linköping (SE); BERGSTRÖM, Andreas, Linköping 58431 (SE); FURUSKOG, Johan, SE-112 49 Stockholm (SE); PARKVALL, Stefan, SE-167 57 Bromma (SE); SAHLIN, Henrik, SE-435 41 Mölnlycke (SE)
(74) Representative: Haseltine Lake Kempner LLP
(86) International application number: PCT/IB2016/051723
(87) International publication number: WO 2016/157059

(56) References cited:
- US-A1- 2010 267 341
- US-A1- 2013 051 364
- US-A1- 2013 064 129
- US-A1- 2013 235 742
- US-A1- 2014 269 967

## Description

### TECHNICAL FIELD

The present disclosure relates, in general, to wireless communications and, more particularly, systems and methods for selecting beam-reference signals for channel-state information reference-signal transmission.

### BACKGROUND

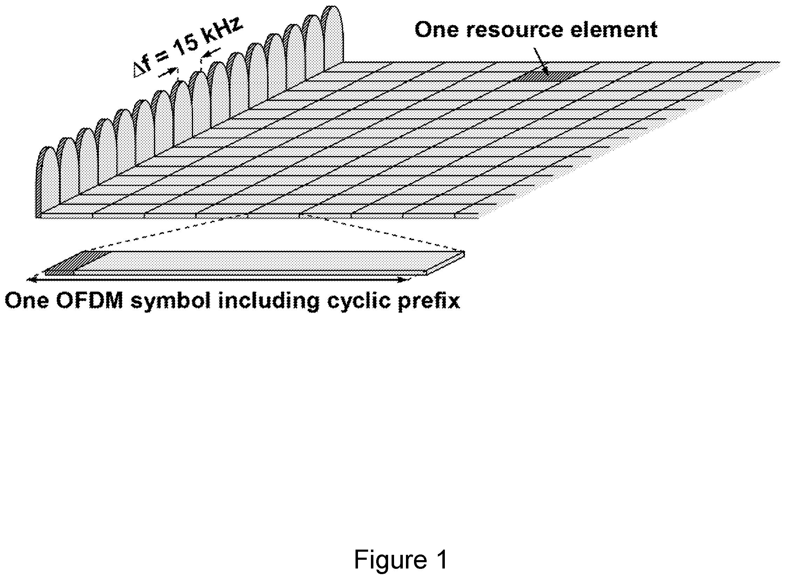

LTE uses Orthogonal Frequency-Division Multiplexing (OFDM) in the downlink and Discrete Fourier Transform (DFT)-spread OFDM (also referred to as single-carrier FDMA (SC-FDMA)) in the uplink. FIGURE 1 illustrates the basic LTE downlink physical resource, which can be seen as a time-frequency grid. As depicted, each resource element corresponds to one OFDM subcarrier during one OFDM symbol interval on a particular antenna port. An antenna port is defined such that the channel over which a symbol on the antenna port is conveyed can be inferred from the channel over which another symbol on the same antenna port is conveyed. There is one resource grid per antenna port.

In the time domain, LTE downlink transmissions are organized into radio frames of 10 ms, each radio frame consisting of ten equally-sized subframes of 1 ms. A subframe is divided into two slots, each of 0.5 ms time duration.

The resource allocation in LTE is described in terms of resource blocks, where a resource block corresponds to one slot in the time domain and 12 contiguous subcarriers with a 15 kHz separation in the frequency domain. Two in time consecutive resource blocks represent a resource block pair and correspond to the time interval upon which scheduling operates.

Multi-antenna techniques can significantly increase the data rates and reliability of a wireless communication system. The performance is in particular improved if both the transmitter and the receiver are equipped with multiple antennas, which results in a multiple-input multiple-output (MIMO) communication channel. Such systems and/or related techniques are commonly referred to as MIMO.

In a system with beamformed transmissions, in order for the transmitter to pick the best beams to transmit in, the network needs feedback from the receiver. Therefore, each beam typically contains a unique RS, which is referred to as a beam-reference signal (BRS). The unique BRS provides a means for the receiving side to identify each beam. For example, the unique BRS may be used to identify beams when performing received power (RSRP) measurements on the beams. However, the BRS does not provide enough information about the channel to allow the system to make decisions to efficiently exploit the channel quality. Likewise, the BRS typically does not cover more than a small part of the total transmission bandwidth and may not occur frequently enough in time to facilitate good channel-quality estimates.

It may be useful to have the possibility for many, closely spaced beams. For example, if a wireless device is in between two possible beam directions, then there may be a loss in beamforming gain. Accordingly, in systems with a finite number of beams, spatial oversampling is commonly deployed, where the number of beams is typically two or four times the number of antenna elements. For example, an array with eight antenna elements (in one dimension) typically supports 16 or 64 beams. As a result, neighboring beams may be seen as being correlated from the transmit side since, for example, eight antenna elements can only support eight orthogonal beams.

The Channel-State Information Reference Symbols (CSI-RS) may be used to overcome these problems. However, the CSI-RS covers the entire bandwidth, which makes it more expensive to transmit in terms of time/frequency-resources. In addition, each beam needs its own CSI-RS in order to evaluate the channel provided by that particular beam. As a result, transmitting a CSI-RS in every beam is a costly operation. Evaluating the CSI-RS, for example by calculating channel parameters such as CSI, PMI and RI, may also be computationally intense in the receiver. Additionally, the size of the CSI reports may be large. This is particularly the case where sub-band reporting is used.

US 2010/0267341 discloses a method for communication which includes receiving at a receiver from a group of two or more transmitters multiple RF transmission beams that alternate in time and space and include at least first and second transmission beams. The method identifies that the first transmission beam causes interference to reception of the second transmission beam. Feedback is sent from the receiver to one or more of the transmitters, so as to cause the transmitters to attenuate the first transmission beam during transmission of the second transmission beam.

### SUMMARY

To address the foregoing problems with existing solutions, disclosed is systems and methods for selecting beam-reference signals for channel-state information reference-signal transmission. Aspects of the disclosure are set out in the independent claims appended hereto, to which the reader's attention is now drawn. Optional features are set out in the dependent claims.

### BRIEF DESCRIPTION OF THE DRAWINGS

For a more complete understanding of the disclosed embodiments and their features and advantages, reference is now made to the following description, taken in conjunction with the accompanying drawings, in which:
FIGURE 1 illustrates the basic LTE downlink physical resource;
FIGURE 2 illustrates an example network for selecting beam-reference signals for channel-state information reference-signal transmission, in accordance with certain embodiments;
FIGURE 3 is a flowchart depicting an example two-part procedure for selecting beam-reference signals for channel-state information reference-signal transmission, in accordance with certain embodiments;
FIGURE 4 illustrates an example network that includes three transmission points utilizing beamforming transmission for transmission to a wireless device, in accordance with certain embodiments;
FIGURE 5 illustrates an example beam-reference signal group index, in accordance with certain embodiments;
FIGURE 6 illustrates an example two-dimensional pattern and grouping of beam-reference signals, in accordance with certain embodiments;
FIGURE 7 illustrates an example wireless device for selecting beam-reference signals for channel-state information reference-signal transmission, in accordance with certain embodiments;
FIGURE 8 illustrates an example method by a wireless device for selecting beam-reference signals for channel-state information reference-signal transmission, in accordance with certain embodiments;
FIGURE 9 illustrates an example computer networking virtual apparatus for selecting beam-reference signals for channel-state information reference-signal transmission, in accordance with certain embodiments;
FIGURE 10 illustrate an example network node for transmitting channel-state information reference signals, in accordance with certain embodiments;
FIGURE 11 is a flowchart illustrating an example method by a network node for transmitting channel-state information reference signals, in accordance with certain embodiments;
FIGURE 12 illustrates an example computer networking virtual apparatus for transmitting channel-state information reference signals, in accordance with certain embodiments;
FIGURE 13 is a flowchart illustrating an example method by a network system for selecting beam-reference signals for channel-state information reference signal transmission, in accordance with certain embodiments;
FIGURE 14 illustrates an example computer networking virtual apparatus for selecting beam-reference signals for channel-state information reference signal transmission, in accordance with certain embodiments; and
FIGURE 15 illustrates an exemplary radio network controller or core network node, in accordance with certain embodiments.

### DETAILED DESCRIPTION

The invention is defined by the appended claims. In the following, embodiments not falling within the scope of the claims should be understood as examples useful to understand the invention.

In a Long-Term Evolution (LTE) network, a two-phase approach is typically used to provide channel-state information feedback by a wireless device receiving multiple beam-reference signals (BRS). The approach may be particularly applicable for 5G wireless technologies.

In a first phase, a network node sends unique narrowband BRS in many or all of its beams. The wireless device receiving the BRS then feeds back RSRP measurements and an RS-index for a selected subset of the measured BRS. The RSRP measurements are then used to determine which beam (and network node) the wireless device should be served by, and whether a handover to another beam or even another network node is necessary. Each RSRP measurement has an identity which is uniquely associated with the network node and the beam that transmitted the RS. In certain embodiments disclosed herein, however, a network node may form and transmit many BRS, and a unique identifier may be associated with each BRS for RSRP measurement purposes. Accordingly, when receiving the RSRP measurements, the network receives information on a beam-by-beam level. Stated differently, the network not only receives received power information about the network node that transmitted the beam but also the particular BRS transmitted from that network node. However, this feedback, which is carried by higher layers in LTE, is based on a narrowband and is reported with a low frequency.

In a second phase, the network node uses the information received from one or more wireless devices and assigns the wideband Channel-State Information Reference-Signal (CSI-RS) to the most promising beams. Thus, based on the RSRP reports received from the wireless devices, a network node selects a subset of beams in which to transmit CSI-RS. The selected beams are the candidates for further evaluation by CSI-RS measurements and the more detailed channel-state information (CSI) reports that are then provided by the wireless device to the network node in the second phase of providing channel-state information feedback. This second phase contains more accurate channel information and, since it is typically carrier over the lowest layer in a CSI report, may have low latency. For example, the CSI reports may have a latency as low as every 5 ms.

Typically, when selecting BRS beams for reporting to the network node during the first phase, the wireless device feeds back a predefined maximum number of the strongest RSRP measurements. More specifically, the wireless device may report, to a network node, the identifiers of the eight strongest RSRP measurements for the BRS transmitted from the particular network node. As stated above, the network node then uses the information received from one or more wireless devices and assigns the wideband CSI-RS to the most promising beams. Thus, where the RSRP measurements provided by the wireless device correspond to the BRS with the highest received RSRP, the network node assigns the wideband CSI-RS to the beams with the highest received RSRP.

The selection of the beams based on the highest RSRP measurements, however, may not result in high spectral efficiency. For example, BRS that have a high transmit correlation to the strongest BRS may also have similarly high RSRP values. Such BRS are, for example, those beams that are closely spaced to the strongest BRS in the angular domain. These correlated beams may all have high RSRP values when measured by the wireless device. Consequently, the correlated beams will all be placed high in the RSRP ranking list by the wireless device and be reported to the network node. Frequently, these correlated beams are transmitted from a single transmission point. Thus, the conventional two-phase approach does not support identifying beams from geographically separated transmission points very well, and the resulting CSI report provides mostly redundant information about the MIMO channel. Additionally, the reported beams may not be suitable for high-rank transmission since the receiver cannot easily separate the information transmitted in the different beams when they are highly correlated. Mathematically speaking, the resulting channel matrix is of a low rank and is not rich enough to support many MIMO layers of information. In contrast, other beams which exhibit lower RSRP may yield a significantly better correlation matrix having a higher rank. These other beams may include non-line-of-sight beams that may be a better choice for high-rank transmissions. CoMP benefits and mobility, such as handover, are difficult to achieve where the network does not know which beams are useful for the different network nodes for the particular wireless device. In a beam-based network, it may be important to have knowledge of candidate beams in multiple network nodes since the connection quality towards a given network node may change rapidly, such as when a wireless device moves around a street corner.

Problems with the conventional two-phase approach may also persist in lowly loaded cells where multi-user MIMO transmission cannot be used if there is only one wireless device to schedule. A single beam can at most carry a two-layer MIMO transmission, and correlated beams are not useful to multiplex a larger number of layers since uncorrelated or even orthogonal beams would be better for that purpose. As a result, maximum attainable spectral efficiency may be limited.

Consequently, by basing the selection criterion solely on RSRP values, beams with lower RSRP, particularly those from other network nodes, get overlooked despite the fact that the beams may provide a combined, multiple-transmission point MIMO channel matrix that supports transmissions with more spatial streams. These other beams may provide higher spectral efficiency or provide support for dynamic point selection where the network may selectively and dynamically transmit data from different network nodes depending on channel or traffic load.

Certain embodiments described herein improve the selection by a wireless device of BRS beams for providing RSRP measurements to a network node. More specifically, a wireless device may implement a BRS selection procedure to ensure high spectral efficiency. In particular embodiments, the beam selection procedure may be influenced by rules that the wireless device follows when selecting BRS for RSRP measurement reporting. As will be described in more detail below, the rules may be received from a network node and explicitly configured in the wireless device, in certain embodiments. In other embodiments, the rules may be implicitly configured in the wireless device by standard specifications.

In certain embodiments, for example, the rules may provide for the selection of a preferred BRS from the received BRS. The rules may then be used to identify other BRS that have a relationship with the preferred BRS. For example, in a particular embodiment, the wireless device may receive a set of indices, wherein each index in the set of indices is associated with an index group. A wireless device may select a strongest or preferred BRS and then determine the particular index group to which the preferred BRS belongs. The Wireless device may then identify the subset of BRS for providing RSRP measurements to a network node from the particular index group, in a particular embodiment. Alternatively, a bias may be applied making it more likely to report a RSRP measurement for a BRS in the same group. After implementation of the beam selection procedure by the wireless device, the RSRP measurements for the selected subset of BRS may be implicitly provided or explicitly reported to the network node. The information can then be used by the network node for the configuration of CSI-RS.

This modified two-phase procedure may ensure that the BRS/beam index reports provided to a network node are useful in networks having many beams of a higher spatial correlation. When the network node receiving the information configures the beam CSI-RS for CSI reporting, there is possibility for a high-rank CSI recommendation from the wireless device and/or CSI reports for beams from different network nodes. As a result, higher spectral efficiency or robustness towards mobility may be achieved.

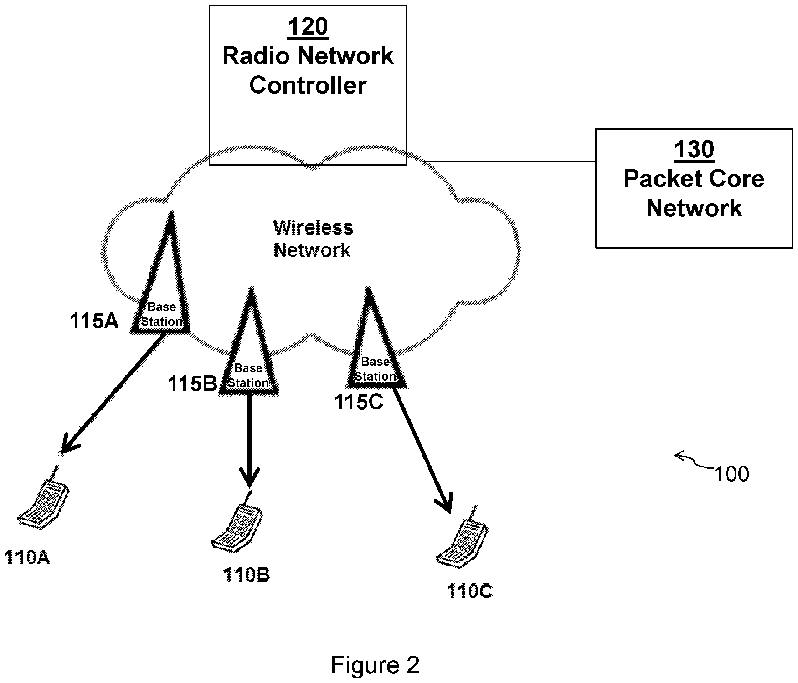

FIGURE 2 is a block diagram illustrating an embodiment of a network 100 for selecting BRS for CSI-RS transmission, in accordance with certain embodiments. Network 100 includes one or more wireless devices 110A-C, which may be interchangeably referred to as wireless devices 110 or UEs 110, and network nodes 115A-C, which may be interchangeably referred to as network nodes 115 or eNodeBs 115, radio network controller 120, and a core network node 130. A wireless device 110 may communicate with network nodes 115 over a wireless interface. For example, wireless device 110A may transmit wireless signals to one or more of network nodes 115, and/or receive wireless signals from one or more of network nodes 115. The wireless signals may contain voice traffic, data traffic, control signals, and/or any other suitable information. In some embodiments, an area of wireless signal coverage associated with a network node 115 may be referred to as a cell. In some embodiments, wireless devices 110 may have D2D capability. Thus, wireless devices 110 may be able to receive signals from and/or transmit signals directly to another wireless device 110. For example, wireless device 110A may be able to receive signals from and/or transmit signals to wireless device 110B.

In certain embodiments, network nodes 115 may interface with a radio network controller 120. Radio network controller 120 may control network nodes 115 and may provide certain radio resource management functions, mobility management functions, and/or other suitable functions. In certain embodiments, radio network controller 120 may interface with core network node 130 via an interconnecting network 125. The interconnecting network 125 may refer to any interconnecting system capable of transmitting audio, video, signals, data, messages, or any combination of the preceding. The interconnecting network may include all or a portion of a public switched telephone network (PSTN), a public or private data network, a localarea network (LAN), a metropolitan-area network (MAN), a wide-area network (WAN), a local, regional, or global communication or computer network such as the Internet, a wireline or wireless network, an enterprise intranet, or any other suitable communication link, including combinations thereof.

Core network node 130 may manage the establishment of communication sessions and provide various other functionality for wireless communication device 110. Wireless communication device 110 exchanges certain signals with core network node 130 using the non-access stratum layer. In non-access stratum (NAS) signaling, signals between wireless communication device 110 and core network node 130 pass transparently through network nodes 120.

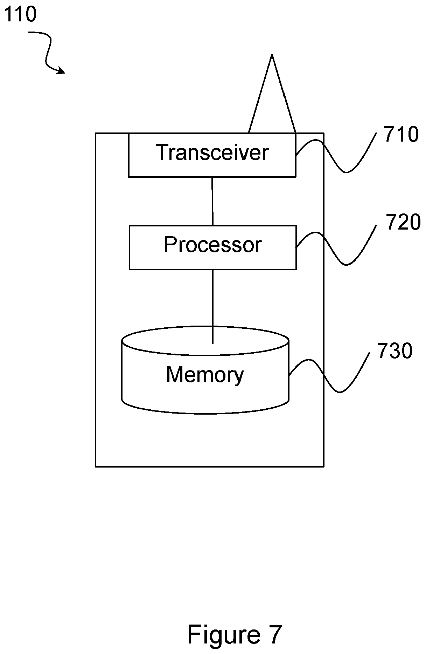

As described above, example embodiments of network 100 may include one or more wireless devices 110, and one or more different types of network nodes capable of communicating (directly or indirectly) with wireless devices 110. Wireless device 110 may refer to any type of wireless device communicating with a node and/or with another wireless device in a cellular or mobile communication system. Examples of wireless device 110 include a mobile phone, a smart phone, a PDA (Personal Digital Assistant), a portable computer (e.g., laptop, tablet), a sensor, a modem, a machine-type-communication (MTC) device / machine-to-machine (M2M) device, laptop embedded equipment (LEE), laptop mounted equipment (LME), USB dongles, a D2D capable device, or another device that can provide wireless communication. A wireless device 110 may also be referred to as UE, a station (STA), a device, or a terminal in some embodiments. Also, in some embodiments, generic terminology, "radio network node" (or simply "network node") is used. It can be any kind of network node, which may comprise a Node B, base station (BS), multi-standard radio (MSR) radio node such as MSR BS, eNode B, network controller, radio network controller (RNC), base station controller (BSC), relay donor node controlling relay, base transceiver station (BTS), access point (AP), transmission points, transmission nodes, RRU, RRH, nodes in distributed antenna system (DAS), core network node (e.g. MSC, MME etc.), O&M, OSS, SON, positioning node (e.g. E-SMLC), MDT, or any suitable network node. Each of wireless communication device 110, network node 115, radio network controller 120, and core network node 130 include any suitable combination of hardware and/or software. Example embodiments of wireless devices 110, network nodes 115, and other network nodes (such as radio network controller or core network node) are described in more detail with respect to FIGURES 7, 11, and 16, respectively.

Although FIGURE 2 illustrates a particular arrangement of network 100, the present disclosure contemplates that the various embodiments described herein may be applied to a variety of networks having any suitable configuration. For example, network 100 may include any suitable number of wireless devices 110 and network nodes 115, as well as any additional elements suitable to support communication between wireless devices or between a wireless device and another communication device (such as a landline telephone). In certain embodiments, wireless communication device 110, network node 120, and core network node 130 use any suitable radio access technology, such as long-term evolution (LTE), LTE-Advanced, UMTS, HSPA, GSM, cdma2000, WiMax, WiFi, another suitable radio-access technology, or any suitable combination of one or more radio-access technologies. For purposes of example, various embodiments may be described within the context of certain radio-access technologies. However, the scope of the disclosure is not limited to the examples and other embodiments could use different radio-access technologies.

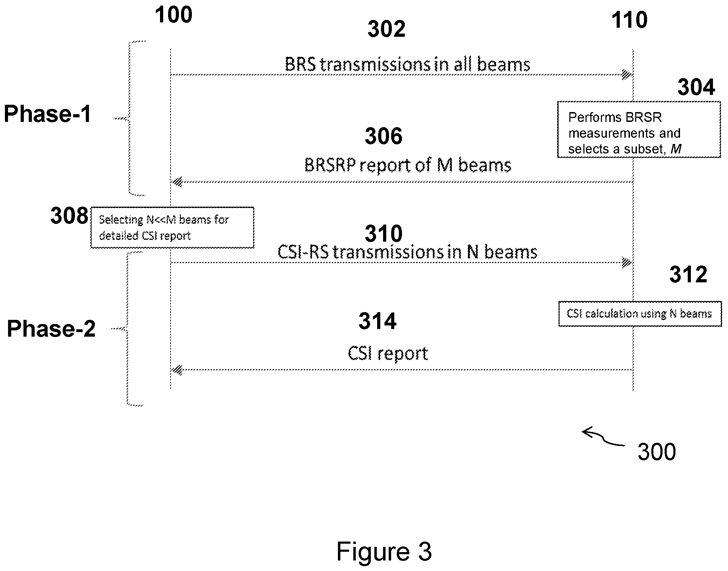

In certain embodiments relating to the reporting of CSI in LTE, wireless device 110 reports RSRP measurements or other related feedback to a network node 115. FIGURE 3 is a flowchart depicting a modified two-phase procedure 300 for selecting BRS for CSI-RS transmission. At step 302, many BRS in many different beams are transmitted from one or multiple network nodes 115 of network 100 to a wireless device 110. Each BRS 302 may be unique and associated with an identity.

At step 304, wireless device 110 performs RSRP measurements on the BRS (BRSRP) and selects a subset, M, of BRS from the received BRS. Whereas previous approaches for selecting BRS based on BRSRP included identifying a predefined number of BRS having the strongest RSRP measurements, certain embodiments provided herein select a subset of BRS that includes a preferred BRS and a one or more additional BRS that has a relationship with the preferred BSR. In a particular embodiment, for example, the preferred BRS includes the BRS having the highest or strongest RSRP measurement of the received beams. One or more rules may then be implemented to determine which BRS have a relationship with the preferred BRS.

At step 306, wireless device 110 reports the identity of each BRS within the subset of BRS to the network 100. In certain embodiments, wireless device 110 may report an RSRP value or a transmission point identifier that is associated with each BRS in the subset of BRS. For example, in a network using beams, BRS for such RSRP measurements may be quickly and efficiently indicated to the network node 115 to identify which BRS are most useful for transmitting data to wireless device 110. In LTE, discovery signals (DRS) may be configured and transmitted per beam as BRS, and wireless device 110 may report RSRP measurements per DRS/beam. The DRS is a wideband signal but sparse in time. For example, the DRS may have a periodicity of approximately ∼80ms.

At step 308, a network node 115 may then use the BRSRP report of *M* beams to identify N useful beams for the particular wireless device 110. To acquire extensive channel information, network node 115 then transmits a unique wideband CSI-RS in each of the N<<M most useful beams at step 310. More specifically, network node 115 transmits CSI-RS for a subset of the beams identified from the BRSRP report.

At step 312, wireless device 110 performs CSI-RS measurements on the CSI-RS received from network node 115. A CSI report is transmitted at step 314 and is the second type of feedback received from wireless device 110. However, the CSI report provides more accurate channel information than the BRSP report provided in step 306. Since it is typically carried over the lowest layer in a CSI report, it can have low periodicity and thus low latency, even less than one ms.

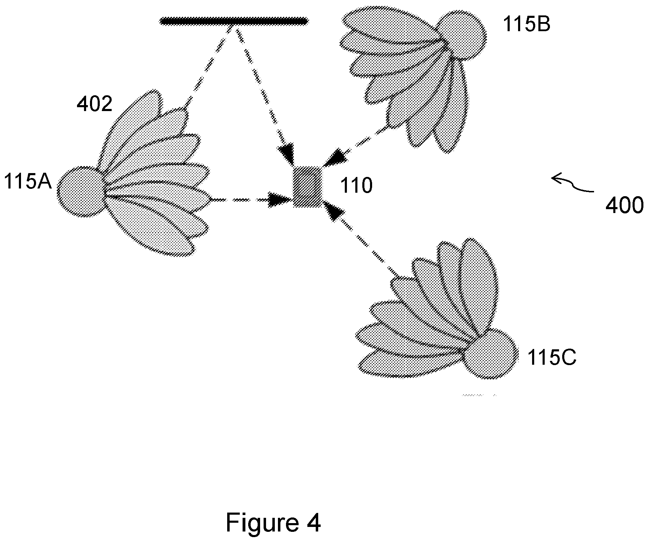

FIGURE 4 illustrates an example network 400 that includes multiple network nodes 115A-C utilizing beamforming for transmission to a wireless device 110. As depicted, there are three network nodes 115A-C operating as transmission points (TPs). Each network node 115 is shown generating seven beams 402. However, it is noted that a typical network node 115 may transmit many tens of beams.

In general, each beam transmitted from network node 115 has a unique BRS which can be distinguished from other BRS by time/frequency allocation or by using different sequences. For example, each beam may be distinguished from every other beam by its short pseudo-random sequence, which, for example, may be the primary or secondary synchronization signals in LTE. The unique sequences provide a set of sequences with low cross and autocorrelation, making them suitable for beam identification.

In certain embodiments, each unique BRS transmitted from one or more network nodes 115 during a certain measurement interval may be associated with an index. In a particular embodiment, wireless device 110 may be preconfigured with an index that is standardized. In other embodiments, wireless device 110 may dynamically receive the index from network nodes 115.

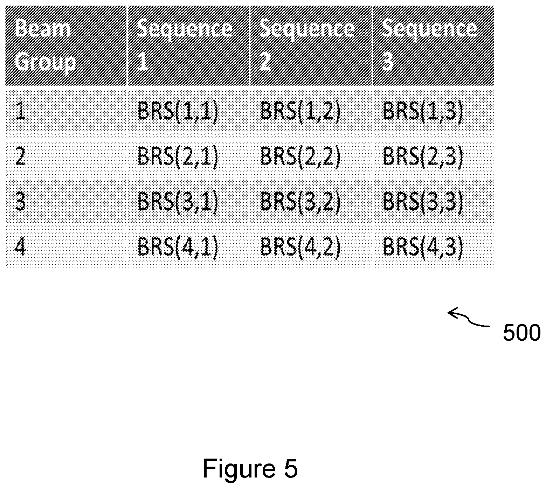

FIGURE 5 illustrates an example BRS group index 500, in accordance with certain embodiments. As shown, the set of indices is divided into groups of indices, here denoted BRS index groups. The groups of indices can in a general case be arranged into a two-dimensional matrix of groups of indices or a three-dimensional matrix of integers such that a group of BRS indices is represented by two indices k and 1.

In a particular embodiment, the two-dimensional grouping structure may be further differentiating of BRS that do not use the same sequence. The BRS groups may be arranged using the two-dimensional index (k,1) such that groups along the k-dimension correspond to the beam groups while groups along the 1-dimension correspond to different sequences.

The division into beam groups is known or is not known to wireless device 110, depending on different embodiments in this application. Stated differently, in certain embodiments, a wireless device 110 may assume a BRS group index is two dimensional determined by a beam group k and a sequence 1, BRS (k,1).

For example, where there are three transmission points that each have their own sequence, as depicted in FIGURE 4, BRS group index 500 may include a column for each of the three sequences. In the depicted example, there are four beam groups per sequence, and the seven beams are distributed the four beam groups.
The term beam indices may be used interchangeably herein with the term BRS indices. From a wireless device 110 perspective, there may not be knowledge of a set of beams or network nodes 115, but rather a set of indices, potentially grouped into index groups (i.e. beam groups and sequences). Moreover, in the second step as described above with respect to some embodiments, CSI-RS is transmitted in different beams and similarly, each CSI-RS is associated with an index which on the network side can be associated with the beam used to transmit the particular CSI-RS with that index.

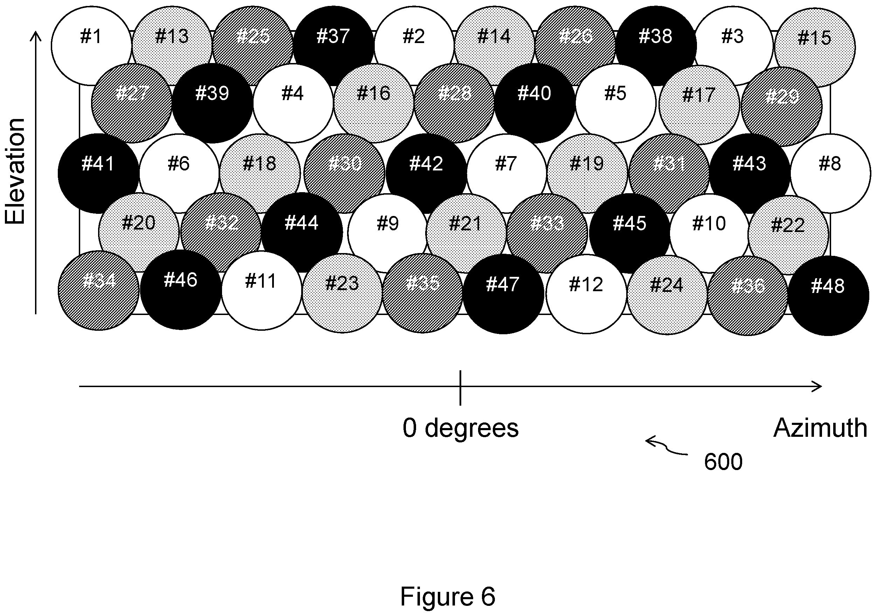

FIGURE 6 illustrates an example two-dimensional pattern 600 and grouping of beam-reference signals, in accordance with certain embodiments. Specifically, the depicted example, includes the main beam pointing angles for 48 beams arranged in a two-dimensional pattern with different elevation and/or azimuth angles. The beams are numbered from #1 to #48 and represented by a circle. The four different shades provided for the beams demonstrate the four beam groups provided in this particular two-dimensional pattern. Thus, one beam group includes beams of the same color or shade. For example, a first beam group may include beams 1, 2, 3, 4, 5, 6, 7, 8, 9, 10, 11, and 12. A second beam group includes beams 13, 14, 15, 16, 17, 18, 19, 20, 21, 22, 23, and 24. A third beam group includes 25, 26, 27, 28, 29, 30, 31, 32, 33, 34, 35, and 36. A fourth beam group includes 37, 38, 39, 40, 41, 42, 43, 44, 45, 46, 47, and 48.

Beams within each beam group are not adjacent to the other beams within the same beam group. As a result, the transmitter-side cross-correlation between beams in the same beam group is lower than the cross-correlation with adjacent beams. For example, beams #1 and #2 exhibit less cross-correlation than beams #1 and #13.

FIGURE 7 illustrates an example wireless device 110 for selecting BRS for CSI-RS transmission, in accordance with certain embodiments. As depicted, wireless device 110 includes transceiver 710, processor 720, and memory 730. In some embodiments, transceiver 710 facilitates transmitting wireless signals to and receiving wireless signals from network node 115 (e.g., via an antenna), processor 720 executes instructions to provide some or all of the functionality described above as being provided by wireless device 110, and memory 730 stores the instructions executed by processor 720. Examples of a network node 115 are provided above.

Processor 720 may include any suitable combination of hardware and software implemented in one or more modules to execute instructions and manipulate data to perform some or all of the described functions of wireless device 110. In some embodiments, processor 720 may include, for example, one or more computers, one or more central processing units (CPUs), one or more microprocessors, one or more applications, and/or other logic.

Memory 730 is generally operable to store instructions, such as a computer program, software, an application including one or more of logic, rules, algorithms, code, tables, etc. and/or other instructions capable of being executed by a processor. Examples of memory 730 include computer memory (for example, Random-Access Memory (RAM) or Read-Only Memory (ROM)), mass-storage media (for example, a hard disk), removable-storage media (for example, a Compact Disk (CD) or a Digital Video Disk (DVD)), and/or or any other volatile or non-volatile, non-transitory computer-readable and/or computer-executable memory devices that store information.

Other embodiments of wireless device 110 may include additional components beyond those shown in FIGURE 7 that may be responsible for providing certain aspects of the wireless device's functionality, including any of the functionality described above and/or any additional functionality (including any functionality necessary to support the solution described above).

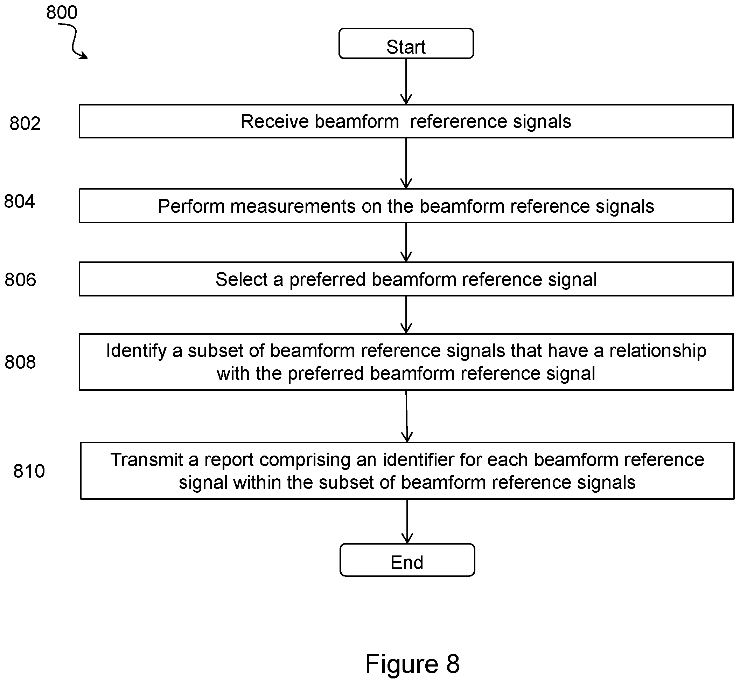

FIGURE 8 illustrates an exemplary method 600 by a wireless device 110 for selecting BRS for CSI-RS transmission, in accordance with certain embodiments. The method begins at step 802 when BRS are received by wireless device 110. Wireless device 110 performs measurements on the BRS at step 804. For example, the measurements may include BRSRP measurements for each of the plurality of BRS.

At step 806, a preferred BRS is selected based on the measurements. In a particular embodiment, for example, the preferred BRS has the largest BRSRP value of the plurality of BSR received by wireless device 110.

At step 808, a subset of BRS that have a relationship with the preferred BRS is identified. In certain embodiments, for example, each BRS in the first subset of the plurality of BRS has a different sequence form the sequence of the preferred BRS. In certain embodiments, each BRS in the subset of plurality of BRS differs in time and frequency from the preferred BRS and every other BRS in the subset of BRS.

In certain embodiments, the subset of the plurality of BRS may be identified based on a set of indices maintained by wireless device 110. Each index in the set of indices may be associated with an index group. In a particular embodiment, the preferred BRS may be used as a pointer to a particular index group to which the preferred BRS belongs. Wireless device 110 may determine the particular index group to which the preferred BRS belongs. In certain embodiments, wireless device 110 may form the subset to include the preferred BRS and other BRS within the particular index group to which the preferred BRS belongs. For example, where wireless device 110 is configured to report M number of BRS to the network, wireless device 110 may select *M* - 1 BSR having the largest BRSRP values in the particular index group to which the preferred BRS belongs.

In other embodiments, wireless device 110 may apply a bias to determine the BRS that should be included in the subset with the preferred BRS. For example, a positive bias may be applied to a measurement metric within the particular index group to which the preferred BRS signal belongs to increase the likelihood of being selected. As another example, a negative bias may be applied to a measurement metric not within the particular group to which the preferred BRS signal belongs to decrease the likelihood of being selected. In certain embodiments, the bias may be received from network node 115. In other embodiments, the bias may be preconfigured in wireless device 110.

At step 810, a report including an identifier for each BRS signal within the subset of BRS is transmitted to network node 115. For example, where wireless device 110 is configured to report M number of BRS to the network, wireless device may report the preferred BRS and the *M* -1 BRS that were selected from the particular index group to which BRS belongs.

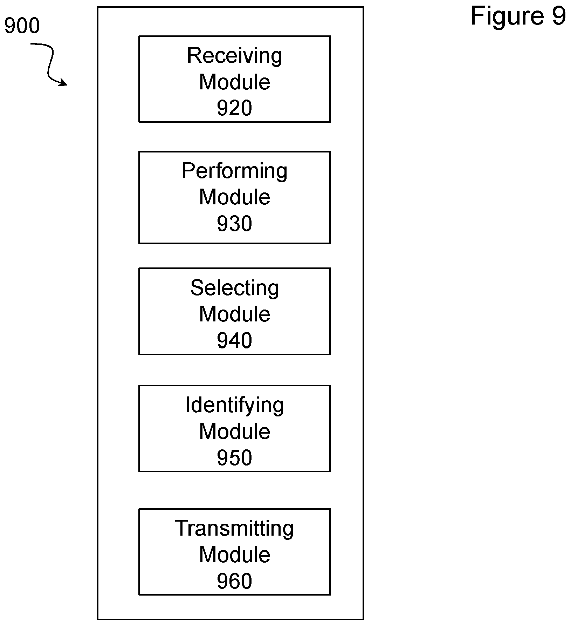

In certain embodiments, the method for selecting BRS for CSI-RS transmission as described above may be performed by a computer networking virtual apparatus. FIGURE 9 illustrates an example computer networking virtual apparatus 900 for selecting BRS for CSI-RS transmission, according to certain embodiments. In certain embodiments, computer networking virtual apparatus 900 may include modules for performing steps similar to those described above with regard to the method illustrated and described in FIGURE 8. For example, computer networking virtual apparatus 900 may include a receiving module 920, a performing module 930, a selecting module 940, an identifying module 950, a transmitting module 960, and any other suitable modules for selecting BRS for CSI-RS transmission. In some embodiments, one or more of the modules may be implemented using one or more processors 720 of FIGURE 7. In certain embodiments, the functions of two or more of the various modules may be combined into a single module.

The receiving module 920 may perform the receiving functions of computer networking virtual apparatus 900. For example, receiving module 920 may receive multiple BRS from a network node 115. In particular embodiments, receiving module 920 may also receive a set of indices. Each index in the set of indices may be associated with an index group. In particular embodiments, receiving module 920 may receive a bias to be applied during the selection of the subset of BRS from the received BRS.

The performing module 930 may perform the performing functions of computer networking virtual apparatus 900. For example, performing module 930 may perform measurements on the plurality of BRS received by wireless device 110. For example, the measurements may include a BRSRP for each the received BRS.

The selecting module 940 may perform the selecting functions of computer networking virtual apparatus 900. For example, selecting module 940 may select a preferred BRS from the received BRS. In certain embodiments, the preferred BRS may be selected based on the measurements obtained by performing module 930. In a particular embodiment, the preferred BRS may be the BRS with the largest BRSRP value.

The identifying module 950 may perform the identifying functions of computer networking virtual apparatus 900. For example, identifying module 950 may identify a subset of BRS that have a relationship with the preferred BRS. In a particular embodiment, for example, each BRS in the first subset of BRS has a different sequence from a sequence of the preferred BRS. Thus, the relationship is that the BRS in the subset have dissimilar sequences. Additionally or alternatively, each BRS in the subset may differ in time and/or frequency from the preferred BRS and every other BRS in the subset. Thus, the relationship may be that the BRS have different time/frequency allocations. In another particular embodiment, the relationship between the BRS identified for the subset and the preferred BRS may be determined based on an index that divides BRS into particular index groups.

The transmitting module 960 may perform the identifying functions of computer networking virtual apparatus 900. For example, transmitting module 960 may transmit a report comprising an identifier for each BRS within the subset of the plurality of BRS. In a particular embodiment, the report may be transmitted to the network node 115 associated with the BRS for the selection of CSI-RS to be transmitted on particular beams within the identified BRS.

Other embodiments of computer networking virtual apparatus 900 may include additional components beyond those shown in FIGURE 9 that may be responsible for providing certain aspects of the wireless device's functionality, including any of the functionality described above and/or any additional functionality (including any functionality necessary to support the solutions described above). The various different types of wireless devices 110 may include components having the same physical hardware but configured (e.g., via programming) to support different radio-access technologies, or may represent partly or entirely different physical components.

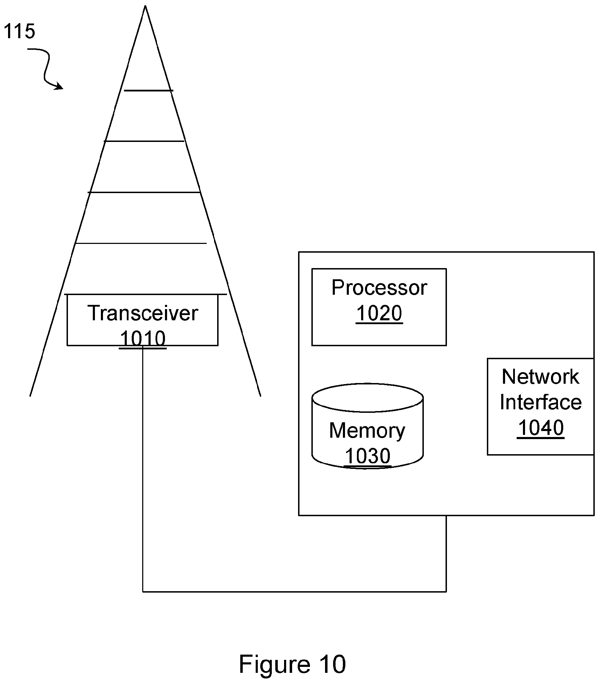

FIGURE 10 illustrates an example network node 115 for transmitting CSI-RS, according to certain embodiments. As described above, network node 115 may be any type of radio-network node or any network node that communicates with a wireless device and/or with another network node. Examples of a network node 115 are provided above.

Network nodes 115 may be deployed throughout network 100 as a homogenous deployment, heterogeneous deployment, or mixed deployment. A homogeneous deployment may generally describe a deployment made up of the same (or similar) type of network nodes 115 and/or similar coverage and cell sizes and inter-site distances. A heterogeneous deployment may generally describe deployments using a variety of types of network nodes 115 having different cell sizes, transmit powers, capacities, and inter-site distances. For example, a heterogeneous deployment may include a plurality of low-power nodes placed throughout a macro-cell layout. Mixed deployments may include a mix of homogenous portions and heterogeneous portions.

Network node 115 may include one or more of transceiver 1010, processor 1020, memory 1030, and network interface 1040. In some embodiments, transceiver 1010 facilitates transmitting wireless signals to and receiving wireless signals from wireless device 110 (e.g., via an antenna), processor 1020 executes instructions to provide some or all of the functionality described above as being provided by a network node 115, memory 1030 stores the instructions executed by processor 1020, and network interface 1040 communicates signals to backend network components, such as a gateway, switch, router, Internet, Public Switched Telephone Network (PSTN), core network nodes or radio network controllers, etc.

In certain embodiments, network node 115 may be capable of using multi-antenna techniques, and may be equipped with multiple antennas and capable of supporting MIMO techniques. The one or more antennas may have controllable polarization. In other words, each element may have two co-located sub elements with different polarizations (e.g., 90 degree separation as in cross-polarization), so that different sets of beamforming weights will give the emitted wave different polarization.

Processor 1020 may include any suitable combination of hardware and software implemented in one or more modules to execute instructions and manipulate data to perform some or all of the described functions of network node 115. In some embodiments, processor 1020 may include, for example, one or more computers, one or more central processing units (CPUs), one or more microprocessors, one or more applications, and/or other logic.

Memory 1030 is generally operable to store instructions, such as a computer program, software, an application including one or more of logic, rules, algorithms, code, tables, etc. and/or other instructions capable of being executed by a processor. Examples of memory 1030 include computer memory (for example, Random-Access Memory (RAM) or Read-Only Memory (ROM)), mass-storage media (for example, a hard disk), removable-storage media (for example, a Compact Disk (CD) or a Digital Video Disk (DVD)), and/or or any other volatile or non-volatile, non-transitory computer-readable and/or computer-executable memory devices that store information.

In some embodiments, network interface 1040 is communicatively coupled to processor 1020 and may refer to any suitable device operable to receive input for network node 115, send output from network node 115, perform suitable processing of the input or output or both, communicate to other devices, or any combination of the preceding. Network interface 1040 may include appropriate hardware (e.g., port, modem, network-interface card, etc.) and software, including protocol conversion and data-processing capabilities, to communicate through a network.

Other embodiments of network node 115 may include additional components beyond those shown in FIGURE 10 that may be responsible for providing certain aspects of the radio-network node's functionality, including any of the functionality described above and/or any additional functionality (including any functionality necessary to support the solutions described above). The various different types of network nodes may include components having the same physical hardware but configured (e.g., via programming) to support different radio-access technologies, or may represent partly or entirely different physical components. Additionally, the terms first and second are provided for example purposes only and may be interchanged.

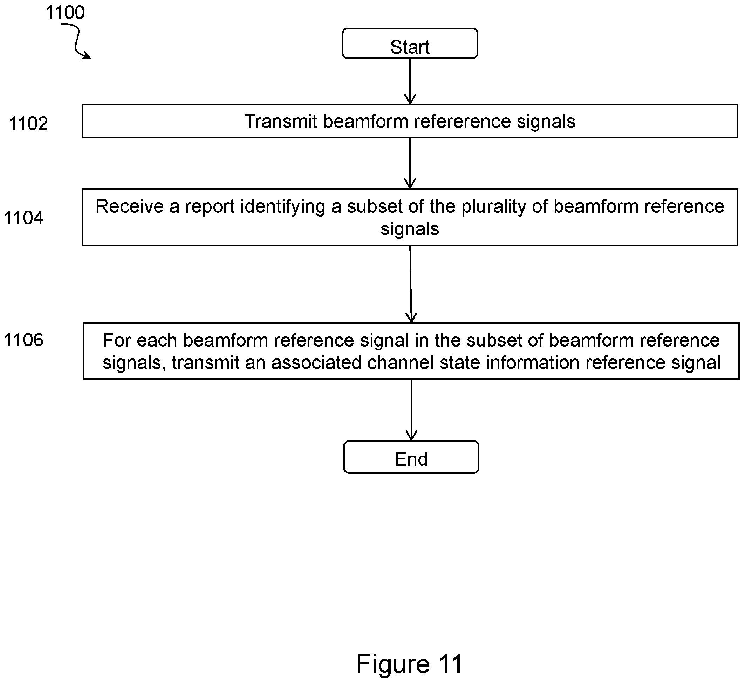

FIGURE 11 illustrates an example method 1100 by a network node 115 for transmitting CSI-RS, according to certain embodiments. The method begins at step 1102 with the transmission of BRS by network node 115.

At step 1104, a report is received from wireless device 110. The report may include an identifier for each BRS within a subset of the previously transmitted BRS. In certain embodiments, the subset of BRS may include a preferred BRS and at least one BRS having a relationship with the BRS. The preferred BRS may include a BRS having the largest BRSRP value, in a particular embodiment. The subset of BRS may each have different sequences from each other and the sequence of the preferred BRS, in certain embodiments. Additionally or alternatively, each BRS in the subset may differ in time and frequency from the preferred BRS and the other BRS in the subset. Network node 115 may then transmit CSI-RS for the subset of BRS.

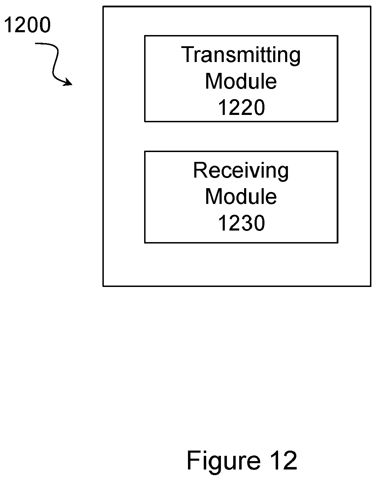

In certain embodiments, the method for transmitting CSI-RS as described above may be performed by a computer networking virtual apparatus. FIGURE 12 illustrates an example computer networking virtual apparatus 1200 for transmitting CSI-RS, according to certain embodiments. In certain embodiments, computer networking virtual apparatus 1200 may include modules for performing steps similar to those described above with regard to the method illustrated and described in FIGURE 11. For example, computer networking virtual apparatus 1200 may include at least one transmitting module 1220, a receiving module 1230, and any other suitable modules for transmitting CSI-RS. In some embodiments, one or more of the modules may be implemented using one or more processors 1020 of FIGURE 10. In certain embodiments, the functions of two or more of the various modules may be combined into a single module.

The at least one transmitting module 1220 may perform the transmitting functions of computer networking virtual apparatus 1200. For example, transmitting module 1220 may transmit a plurality of BRS to a wireless device 110, in some embodiments.

The receiving module 1230 may perform the receiving functions of computer networking virtual apparatus 1200. For example, in a particular embodiment, receiving module 1230 may receive a report from wireless device 110. The report may include an identifier for each BRS within a subset of the previously transmitted BRS. In certain embodiments, the subset of BRS may include a preferred BRS and at least one BRS having a relationship with the BRS. The preferred BRS may include a BRS having the largest BRSRP value, in a particular embodiment. The subset of BRS may each have different sequences from each other and the sequence of the preferred BRS, in certain embodiments. Additionally or alternatively, each BRS in the subset may differ in time and frequency from the preferred BRS and the other BRS in the subset.

In certain embodiments, the at least one transmitting module 1220 may perform additional transmitting functions of computer networking virtual apparatus 1200. For example, transmitting module 1220 may transmit a CSI-RS for the subset of BRS identified in a report received by receiving module 1230.

Other embodiments of computer networking virtual apparatus 1200 may include additional components beyond those shown in FIGURE 12 that may be responsible for providing certain aspects of the network node's 115 functionality, including any of the functionality described above and/or any additional functionality (including any functionality necessary to support the solutions described above). The various different types of wireless devices 115 may include components having the same physical hardware but configured (e.g., via programming) to support different radio-access technologies, or may represent partly or entirely different physical components.

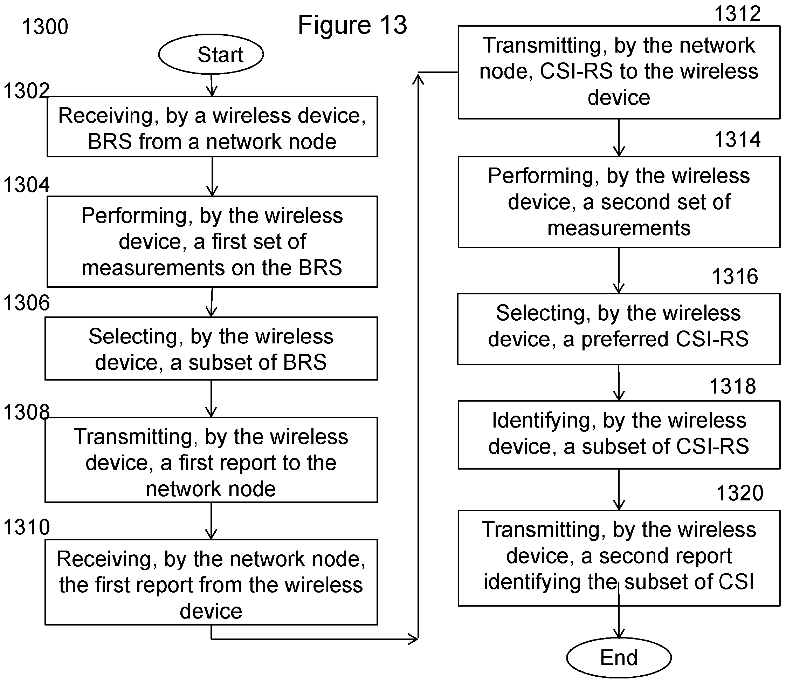

FIGURE 13 is a flowchart depicting a modified procedure 300 for selecting BRS for CSI-RS transmission. At step 1302, BRS in many different beams are received by a wireless device. The BRS may be transmitted from one or multiple network nodes 115 of network 100. Each BRS 302 received by wireless device 110 may be unique and associated with an identity.

At step 1304, wireless device 110 performs a first set of measurements on the BRS (BRSRP). In a particular embodiment, the measurements may include RSRP measurements on the BSR (BRSRP).

At step 1306, wireless device 110 selects, based on the first set of measurements, a subset of BRS from the received BRS. For example, in certain embodiments, the subset of BRS may include a predefined number, *M*, of BRS selected from the plurality of BRS received by wireless device 110. Specifically, wireless device 110 may select the BRS having the strongest RSRP measurements, in certain embodiments. In a particular embodiment, *M* may be equal to sixteen. Thus, wireless device 110 may select the sixteen BRS having the highest RSRP measurements for the subset of BRS.

At step 1308, wireless device 110 transmits a first report to network node 115. The report may include the identity of each BRS within the subset of BRS selected in step 1306. For example, wireless device 110 may report an RSRP value or a transmission point that is associated with each BRS in the subset of BRS.

At step 1310, network node 115 receives the first report from wireless device 110. Specifically, network node 115 may receive the BRSRP report identifying M beams. Network node 115 may use the first report to identify P useful beams within the M beams that are particularly useful for transmission to wireless device 110. To acquire more extensive channel information, network node 115 then transmits a unique wideband CSI-RS in each of the P beams at step 1312.

At step 1314, wireless device 110 performs a second set of measurements on the received CSI-RS. Specifically, wireless device 110 performs correlation estimation using the CSI-RS in the P beams. Based on the second set of performed measurements, wireless device 110 may select a preferred CSI-RS from the plurality of CSI-RS received by wireless device 110 at step 1316. In a particular embodiment, for example, the preferred CSI-RS may include the beam having the most highly ranked channel matrix. Stated differently, the preferred CSI-RS may be beams that give the lowest cross-correlation.

At step 1318, wireless device may identify a subset of CSI-RS having a relationship with the preferred CSI-RS. Specifically, one or more rules may be implemented to determine which CSI-RS have a relationship with the preferred CSI-RS. Wireless device 110 may then transmit a second report identifying the subset of CSI at a step 1320.

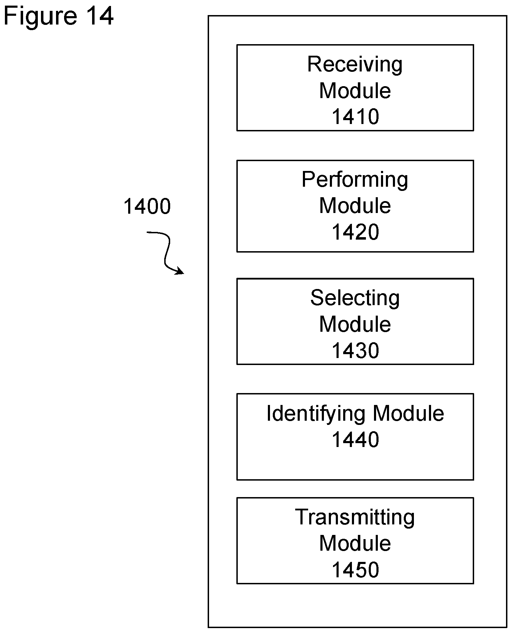

In certain embodiments, the method for selecting BRS for CSI-RS transmission as described above may be performed by a computer networking virtual apparatus. FIGURE 14 illustrates an example computer networking virtual apparatus 1400 for selecting BRS for CSI-RS transmission, according to certain embodiments. In certain embodiments, computer networking virtual apparatus 1400 may include modules for performing steps similar to those described above with regard to the method illustrated and described in FIGURE 13. For example, computer networking virtual apparatus 1400 may include at least one receiving module 1410, at least one performing module 1420, at least one selecting module 1430, at least one identifying module 1440, at least one transmitting module 1450, and any other suitable modules for selecting BRS for CSI-RS transmission. In some embodiments, one or more of the modules may be implemented using processor 720 of FIGURE 7 and/or processor 1020 of FIGURE 10. In certain embodiments, the functions of two or more of the various modules may be combined into a single module.

The at least one receiving module 1410 may perform the receiving functions of computer networking virtual apparatus 1400. For example, the at least one receiving module 1410 may receive BRS from a network node. In certain embodiments, each BRS 302 received by wireless device 110 may be unique and associated with an identity.

The at least one performing module 1420 may perform the performing functions of computer networking virtual apparatus 1400. For example, the at least one performing module 1420 may perform a first set of measurements on the BRS (BRSR). In a particular embodiment, performing the first set of measurements may include performing RSRP measurements on the BSR (BRSR).

The at least one selecting module 1430 may perform the selecting functions of computer networking virtual apparatus 1400. For example, the at least one selecting module 1430 may select, based on the first set of measurements, a subset of BRS from the received BRS. For example, in certain embodiments, the subset of BRS may include a predefined number, *M*, of BRS selected from the plurality of BRS received by wireless device 110. Specifically, the BRS having the strongest RSRP measurements may be selected, in certain embodiments.

The at least one transmitting module 1450 may perform the transmitting functions of computer networking virtual apparatus 1400. For example, transmitting module 1450 may transmit a first report to network node 115. The report may include the identity of each BRS within the subset of BRS selected in step 1306. For example, wireless device 110 may report a RSRP value or a transmission point identifier that is associated with each BRS in the subset of BRS.

In certain embodiments, the at least one receiving module 1410 or another receiving module may perform additional receiving functions of the computer networking virtual apparatus 1400. For example, the receiving module 1410 may receive the first report transmitted from the wireless device. Specifically, receiving module 1410 may receive a BRSRP report identifying *M* beams. Network node 115 may use the first report to identify P useful beams within the *M* beams that are particularly useful for transmission to wireless device 110.

In certain embodiments, the at least one transmitting module 1450 or another transmitting module may perform additional transmitting functions of computer networking virtual apparatus 1400. For example, transmitting module 1450 may transmit CSI-RS in each of the *P* beams.

In certain embodiments, the at least one performing module 1420 or another performing module may perform additional performing functions of computer networking virtual apparatus 1400. For example, performing module 1420 may perform a second set of measurements on the plurality of CSI-RS. Specifically, performing module 1420 may perform correlation estimation using the CSI-RS in the *P* beams.

In certain embodiments, the at least one selecting module 1430 or another selecting module may perform additional selecting functions of computer networking virtual apparatus 1400. For example, selecting module 1430 may select a preferred CSI-RS from the received CSI-RS. In a particular embodiment, for example, the preferred CSI-RS may include the beam having the most highly ranked channel matrix. Stated differently, the preferred CSI-RS may be beams that give the lowest cross-correlation.

The at least one identifying module 1440 may perform the identifying functions of computer networking virtual apparatus 1400. For example, identifying module 1440 may identify a subset of CSI-RS that have a relationship with the preferred CSI-RS. Specifically, identifying module 1440 may implement one or more rules to determine which CSI-RS have a relationship with the preferred CSI-RS.

In certain embodiments, the at least one transmitting module 1450 or another transmitting module may perform additional transmitting functions of computer networking virtual apparatus 1400. For example, transmitting module 1450 may transmit a second report identifying the subset of CSI.

Other embodiments of computer networking virtual apparatus 1400 may include additional components beyond those shown in FIGURE 14 that may be responsible for providing certain aspects of network functionality, including any of the functionality described above and/or any additional functionality (including any functionality necessary to support the solutions described above). The various different types of network components may include components having the same physical hardware but configured (e.g., via programming) to support different radio-access technologies, or may represent partly or entirely different physical components.

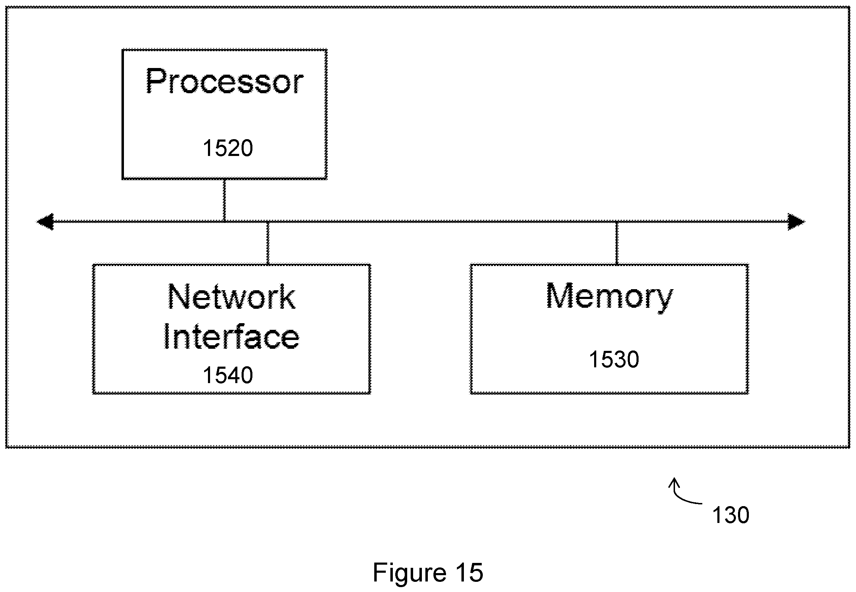

FIGURE 15 illustrates an exemplary radio network controller 120 or core network node 130, in accordance with certain embodiments. Examples of network nodes can include a mobile switching center (MSC), a serving GPRS support node (SGSN), a mobility management entity (MME), a radio network controller (RNC), a base station controller (BSC), and so on. The radio network controller 120 or core network node 130 include processor 1520, memory 1530, and network interface 1540. In some embodiments, processor 1520 executes instructions to provide some or all of the functionality described above as being provided by the network node, memory 1530 stores the instructions executed by processor 1520, and network interface 1540 communicates signals to any suitable node, such as a gateway, switch, router, Internet, Public Switched Telephone Network (PSTN), network nodes 115, radio network controllers 120 or core network nodes 130, etc.

Processor 1520 may include any suitable combination of hardware and software implemented in one or more modules to execute instructions and manipulate data to perform some or all of the described functions of the radio network controller 120 or core network node 130. In some embodiments, processor 1520 may include, for example, one or more computers, one or more central processing units (CPUs), one or more microprocessors, one or more applications, and/or other logic.

Memory 1530 is generally operable to store instructions, such as a computer program, software, an application including one or more of logic, rules, algorithms, code, tables, etc. and/or other instructions capable of being executed by a processor. Examples of memory 830 include computer memory (for example, Random-Access Memory (RAM) or Read-Only Memory (ROM)), mass-storage media (for example, a hard disk), removable-storage media (for example, a Compact Disk (CD) or a Digital Video Disk (DVD)), and/or or any other volatile or non-volatile, non-transitory computer-readable and/or computer-executable memory devices that store information.

In some embodiments, network interface 1540 is communicatively coupled to processor 1520 and may refer to any suitable device operable to receive input for the network node, send output from the network node, perform suitable processing of the input or output or both, communicate to other devices, or any combination of the preceding. Network interface 1540 may include appropriate hardware (e.g., port, modem, network interface card, etc.) and software, including protocol conversion and data processing capabilities, to communicate through a network.

Other embodiments of the network node may include additional components beyond those shown in FIGURE 15 that may be responsible for providing certain aspects of the network node's functionality, including any of the functionality described above and/or any additional functionality (including any functionality necessary to support the solution described above).

According to certain embodiments, a method for selecting beam-reference signals for channel-state information reference-signal transmission by a wireless device is provided. The method includes receiving, from a network node, a plurality of beam-reference signals. The wireless device performs measurements on the plurality of beam-reference signals. Based on the performed measurements, a preferred beam-reference signal is selected from the plurality of beam-reference signals. A subset of the plurality of beam-reference signals that have a relationship with the preferred beam-reference signal is identified. Information identifying the subset of the plurality of beam-reference signals is transmitted to the network node.

According to certain embodiments, a wireless device for selecting beam-reference signals for channel-state information reference-signal transmission is provided. The wireless device includes a memory storing one or more relationships between a plurality of beam-reference signals and a processor with access to the memory. The processor is operable to receive, from a network node, a plurality of beam-reference signals. Measurements are performed on the plurality of beam-reference signals. Based on the performed measurements, a preferred beam-reference signal from the plurality of beam-reference signals is selected. Based on the one or more relationships stored in the memory, a subset of the plurality of beam-reference signals that have a relationship with the preferred beam-reference signal is selected. Information identifying the subset of the plurality of beam-reference signals is transmitted to the network node.

According to certain embodiments, a method for transmitting channel-state information reference signals by a network node is provided. The method includes transmitting, to a wireless device, a plurality of beam-reference signals. Information identifying a subset of beam-reference signals is received from the wireless device. The subset includes a preferred beam-reference signal and at least one beam-reference signal having a relationship with the preferred beam-reference signal. For each beam-reference signal in the subset of beam-reference signals, an associated channel-state information reference signal is transmitted to the wireless device.

According to certain embodiments, a network node is provided for transmitting channel-state information reference signals, the network node. The network node includes a memory storing instructions and a processor in communication with the memory. The processor is operable to execute the instructions to cause the processor to transmit, to a wireless device, a plurality of beam-reference signals. Information identifying the subset of beam-reference signals is received from the wireless device. The subset includes a preferred beam-reference signal and at least one beam-reference signal having a relationship with the preferred beam-reference signal. For each beam-reference signal in the subset of beam-reference signals, an associated channel-state information reference signal is transmitted to the wireless device.

According to certain embodiments, a method for selecting beam-reference signals for channel-state information reference signal transmission by a network system is provided. The method includes receiving, by a wireless device, a plurality of beam-reference signals from a network node. The wireless device performs a first set of measurements on the plurality of beam-reference signal. Based on the first set of performed measurements, the wireless device selects a subset of beam-reference signals. The subset includes a number, *M,* of beam-reference signals having the highest BRSR values of the plurality of beam-reference signals. Information identifying the subset of beam-reference signals is transmitted to the network node. The network node receives the first report from the wireless device and transmits a plurality of channel-state information reference signals to the wireless device. The plurality of channel-state information reference signals include a number, P, of channel-state information reference signals, where P is less than M. The wireless device performs a second set of measurements on the plurality of channel-state information reference signals. Based on the second set of performed measurements, the wireless device selects a preferred channel-state information reference signal from the plurality of channel-state information reference signals. The wireless device identifies a subset of channel-state information reference signals that have a relationship with the preferred channel-state information reference signal and transmits information identifying the subset of channel-state information reference signals to the network node.

Certain embodiments of the present disclosure may provide one or more technical advantages. For example, certain embodiments may improve the usefulness of BRS and beam-index reports in networks with many beams of a higher transmit correlation. Stated differently, BRS and beam-index reports may be more useful in systems having beams that exhibit high spatial correlation. Another advantage may be the configuration of CSI-RS for CSI reporting based on high-rank CSI recommendations from the wireless device. Still another advantage may be the configuration of CSI-RS for beams from different transmission points. As a result, certain embodiments may achieve higher spectral efficiency and/or robustness towards mobility.

Modifications, additions, or omissions may be made to the systems and apparatuses described herein without departing from the scope of the disclosure. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods described herein without departing from the scope of the disclosure. The methods may include more, fewer, or other steps. Additionally, steps may be performed in any suitable order.

Abbreviations used in the preceding description include:
- BRS: Beam Reference Signal (5G concept RS)
- BRSRP: BRS Received Power
- CoMP: Co-ordinated Multi-Point
- CSI: Channel-State Information
- CSI-RS: Channel-State Information - Reference Signal
- DRS: Discovery Reference Signal (LTE Release 12)
- DFT: Discrete Fourier Transform
- LA: Link Adaptation
- LTE: Long-Term Evolution
- MIMO: Multiple Input Multiple Output
- NW: Network
- OFDM: Orthogonal Frequency-Division Multiplexing
- PMI: Precoding Matrix Index
- RI: Rank Indicator
- RS: Reference Signal
- RSRP: Reference Signal Received Power
- SU-MIMO: Single-User - Multiple Input Multiple Output
- TP: Transmission Point
- UE: User Equipment
- WCDMA: Wideband Code-Division Multiple Access

## Claims

1. A method (800) by a wireless device (110) for selecting beam-reference signals for channel-state information reference-signal transmission, the method comprising:
receiving, from a network node (115) via a plurality of beams, a plurality of beam-reference signals (402), BRS, each beam-reference signal being associated with one of a plurality of beam groups, and using a sequence that allows identification of its respective beam, wherein each beam-reference signal uses a different sequence to other beam-reference signals within the same beam group;
performing, by the wireless device (110), measurements on the plurality of beam-reference signals (402);
based on the performed measurements, selecting a preferred beam-reference signal from the plurality of beam-reference signals (402);
identifying a subset of the plurality of beam-reference signals that are in the same beam group as the preferred beam-reference signal; and
transmitting, to the network node (115), information identifying the subset of the plurality of beam-reference signals.

2. The method (800) of Claim 1, wherein:
performing the measurements comprises measuring a received power per BRS, BRSRP, for each of the plurality of beam-reference signals (402), and
the preferred beam-reference signal has a largest BRSRP value of the plurality of beam-reference signals (402).

3. The method (800) of any one of Claims 1-2, wherein:
the preferred beam-reference signal is of a first sequence; and
each beam-reference signal in the first subset of the plurality of beam-reference signals (402) is based on a different sequence from a sequence of the preferred beam-reference signal.

4. The method (800) of any one of Claims 1-3, wherein each beam-reference signal in the subset of the plurality of beam-reference signals (402) differs in time and frequency from the preferred beam-reference signal and every other beam-reference signal in the subset of beam-reference signals.

5. The method (800) of any one of Claims 1-4, further comprising:
receiving, by the wireless device (110), a set of indices (500), wherein each index in the set of indices (500) is associated with one of the beam groups;
determining a particular beam group to which the preferred beam-reference signal belongs; and
identifying the subset of the plurality of beam-reference signals from the particular beam group to which the preferred beam-reference signal belongs.

6. The method (800) of any of Claims 1-4, further comprising:
receiving, by the wireless device (110), a set of indices (500), wherein each index in the set of indices (500) is associated with one of the beam groups;
determining a particular beam group to which the preferred beam-reference signal belongs; and
when identifying the first subset of the plurality of beam-reference signals, applying a bias, wherein the bias is selected from the group comprising of:
a positive bias applied to increase a likelihood that each beam-reference signal within the particular beam group to which the preferred beam-reference signal belongs is identified as having a relationship with the preferred beam-reference signal; and
a negative bias applied to decrease a likelihood that each beam-reference signal within the particular beam group to which the preferred beam-reference signal belongs is identified as having a relationship with the preferred beam-reference signal.

7. The method (800) of Claim 6, wherein the positive or negative bias is received from the network node (115) via RRC-signaling.

8. The method (800) of Claim 6, wherein the positive or negative bias is preconfigured in the wireless device (110).

9. A wireless device (110) for selecting beam-reference signals for channel-state information reference-signal transmission, the wireless device comprising:
a memory (730) storing one or more relationships between a plurality of beam-reference signals;
a processor (720) with access to the memory (730), the processor (720) operable to perform the method according to any one of the preceding claims.

10. A method (1100) by a network node (115) for transmitting channel-state information reference signals, the method comprising:
transmitting, to a wireless device (110), a plurality of beam-reference signals (402) via a plurality of beams, each beam-reference signal being associated with one of a plurality of beam groups, and using a sequence that allows identification of its respective beam, wherein each beam-reference signal uses a different sequence to other beam-reference signals within the same beam group;
receiving, from the wireless device (110), information identifying a subset of beam-reference signals, the subset comprising:
a preferred beam-reference signal; and
at least one beam-reference signal in the same beam group as the preferred beam-reference signal;
for each beam-reference signal in the subset of beam-reference signals, transmitting, to the wireless device (110), an associated channel-state information reference signal.

11. The method (1100) of Claim 10, wherein:
the preferred beam-reference signal has a largest received power per beam-reference signal value of the plurality of beam-reference signals (402); and
at least one of the following conditions is met:
the at least one beam-reference signal in the same beam group as the preferred beam-reference signal in the subset is based on a different sequence from a sequence of the preferred beam-reference signal; and
each beam-reference signal in the subset of the plurality of beam-reference signals (402) differs in time and frequency from the preferred beam-reference signal and every other beam-reference signal in the subset of beam-reference signals.

12. The method (1100) of any of Claims 10-11, further comprising:
transmitting, to the wireless device, a set of indices (500), wherein each index in the set of indices (500) is associated with one of the beam groups, and
wherein the preferred beam-reference signal and the at least one beam-reference signal in the same beam group as the preferred beam-reference signal are indexed within a particular beam group.

13. The method (1100) of any of Claims 10-12, further comprising:
transmitting, to the wireless device (110), a bias to be applied in determining the subset of beam-reference signals, wherein the bias is selected from the group comprising of:
a positive bias that is applied to increase a likelihood that each beam-reference signal within the particular beam group to which the preferred beam-reference signal belongs is identified as having a relationship with the preferred beam-reference signal; and
a negative bias that is applied to decrease a likelihood that each beam-reference signal within the particular beam group to which the preferred beam-reference signal belongs is identified as having a relationship with the preferred beam-reference signal.

14. A network node (115) for transmitting channel-state information reference signals, the network node (115) comprising:
a memory (1030) storing instructions; and
a processor (1020) in communication with the memory (1030), the processor (1020) operable to execute the instructions to cause the processor (1020) to perform the method according to any one of claims 10 to 13.

## Patentansprüche

1. Verfahren (800) durch eine drahtlose Vorrichtung (110) zum Auswählen von Strahlreferenzsignalen zur Übertragung von Kanalzustandsinformations-Referenzsignalen, wobei das Verfahren umfasst:
Empfangen einer Mehrzahl von Strahlreferenzsignalen, BRS, (402) von einem Netzwerkknoten (115) über eine Mehrzahl von Strahlen, wobei jedes Strahlreferenzsignal mit einer von einer Mehrzahl von Strahlgruppen assoziiert ist, und Verwenden einer Sequenz, welche die Identifizierung seines jeweiligen Strahls ermöglicht, wobei jedes Strahlreferenzsignal eine andere Sequenz als andere Strahlfrequenzsignale innerhalb der gleichen Strahlgruppe verwendet;
Durchführen von Messungen an der Mehrzahl von Strahlreferenzsignalen (402) durch die drahtlose Vorrichtung (110);
Auswählen eines bevorzugten Strahlreferenzsignals aus der Mehrzahl von Strahlreferenzsignalen (402) basierend auf den durchgeführten Messungen;
Identifizieren eines Teilsatzes der Mehrzahl von Strahlreferenzsignalen, die in der gleichen Strahlgruppe sind, als das bevorzugte Strahlreferenzsignal; und
Senden von Informationen, die den Teilsatz der Mehrzahl von Strahlreferenzsignalen identifizieren, an den Netzwerkknoten (115).

2. Verfahren (800) nach Anspruch 1, wobei:
das Durchführen der Messungen ein Messen einer Empfangsleistung pro BRS, BRSRP, für jedes der Mehrzahl von Strahlreferenzsignalen (402) umfasst, und
das bevorzugte Strahlreferenzsignal einen größten BRSRP-Wert der Mehrzahl von Strahlreferenzsignalen (402) aufweist.

3. Verfahren (800) nach einem der Ansprüche 1 bis 2, wobei:
das bevorzugte Strahlreferenzsignal von einer ersten Sequenz ist;
jedes Strahlreferenzsignal im ersten Teilsatz der Mehrzahl von Strahlreferenzsignalen (402) auf einer von einer Sequenz des bevorzugten Strahlreferenzsignals verschiedenen Sequenz basiert.

4. Verfahren (800) nach einem der Ansprüche 1 bis 3, wobei jedes Strahlreferenzsignal im Teilsatz der Mehrzahl von Strahlreferenzsignalen (402) sich zeitlich und frequenzmäßig vom bevorzugten Strahlreferenzsignal und jedem anderen Strahlreferenzsignal im Teilsatz von Strahlreferenzsignalen unterscheidet.

5. Verfahren (800) nach einem der Ansprüche 1 bis 4, ferner umfassend:
Empfangen eines Satzes von Indizes (500) durch die drahtlose Vorrichtung (110), wobei jeder Index im Satz von Indizes (500) mit einer der Strahlgruppen assoziiert ist;
Bestimmen einer jeweiligen Strahlgruppe, zu welcher das bevorzugte Strahlreferenzsignal gehört; und
Identifizieren des Teilsatzes der Mehrzahl von Strahlreferenzsignalen aus der jeweiligen Strahlgruppe, zu welcher das bevorzugte Strahlreferenzsignal gehört.

6. Verfahren (800) nach einem der Ansprüche 1 bis 4, ferner umfassend:
Empfangen eines Satzes von Indizes (500) durch die drahtlose Vorrichtung (110), wobei jeder Index im Satz von Indizes (500) mit einer der Strahlgruppen assoziiert ist;
Bestimmen einer jeweiligen Strahlgruppe, zu welcher das bevorzugte Strahlreferenzsignal gehört; und
Anlegen einer Vorspannung beim Identifizieren des ersten Teilsatzes der Mehrzahl von Strahlreferenzsignalen, wobei die Vorspannung ausgewählt wird aus der Gruppe bestehend aus:
einer positiven Vorspannung, die angelegt wird, um eine Wahrscheinlichkeit zu erhöhen, dass jedes Strahlreferenzsignal innerhalb der jeweiligen Strahlgruppe, zu welcher das bevorzugte Strahlreferenzsignal gehört, als eine Beziehung mit dem bevorzugten Strahlreferenzsignals aufweisend identifiziert wird;
einer negativen Vorspannung, die angelegt wird, um eine Wahrscheinlichkeit zu verringern, dass jedes Strahlreferenzsignal innerhalb der jeweiligen Strahlgruppe, zu welcher das bevorzugte Strahlreferenzsignal gehört, als eine Beziehung mit dem bevorzugten Strahlreferenzsignals aufweisend identifiziert wird.

7. Vorrichtung (800) nach Anspruch 6, wobei die positive oder negative Vorspannung über RRC-Signalisierung vom Netzwerkknoten (115) empfangen wird.

8. Vorrichtung (800) nach Anspruch 6, wobei die positive oder negative Vorspannung in der drahtlosen Vorrichtung (110) vorkonfiguriert wird.

9. Drahtlose Vorrichtung (110) zum Auswählen von Strahlreferenzsignalen zur Übertragung von Kanalzustandsinformations-Referenzsignalen, wobei die drahtlosen Vorrichtung umfasst:
einen Speicher (730), der eine oder mehrere Beziehungen zwischen einer Mehrzahl von Strahlreferenzsignalen speichert;
einen Prozessor (720) mit Zugriff auf den Speicher (730), wobei der Prozessor (720) zum Durchführen des Verfahrens nach einem der vorhergehenden Ansprüche ausgelegt ist.

10. Verfahren (1100) durch einen Netzwerkknoten (115) zum Senden von Kanalzustandsinformations-Referenzsignalen, wobei das Verfahren umfasst:
Senden einer Mehrzahl von Strahlreferenzsignalen (402) über eine Mehrzahl von Strahlen an eine drahtlose Vorrichtung (110), wobei jedes Strahlreferenzsignal mit einer von einer Mehrzahl von Strahlgruppen assoziiert ist, und Verwenden einer Sequenz, welche die Identifizierung seines jeweiligen Strahls ermöglicht, wobei jedes Strahlreferenzsignal eine andere Sequenz als andere Strahlfrequenzsignale innerhalb der gleichen Strahlgruppe verwendet;
Empfangen von Informationen, die einen Teilsatz von Strahlreferenzsignalen identifizieren, von der drahtlosen Vorrichtung (110), wobei der Teilsatz umfasst:
ein bevorzugtes Strahlreferenzsignal;
mindestens ein Strahlreferenzsignal in der gleichen Strahlgruppe wie das bevorzugte Strahlreferenzsignal;
Senden für jedes Strahlreferenzsignal im Teilsatz von Strahlreferenzsignalen eines assoziierten Kanalzustandsinformations-Referenzsignals an die drahtlose Vorrichtung (110).

11. Verfahren (1100) nach Anspruch 10, wobei:
das bevorzugte Strahlreferenzsignal einen größten Empfangsleistung-pro-Strahlreferenzsignal-Wert der Mehrzahl von Strahlreferenzsignalen (402) aufweist; und
mindestens eine der folgenden Bedingungen erfüllt wird:
das mindestens eine Strahlreferenzsignal in der gleichen Strahlgruppe wie das bevorzugte Strahlreferenzsignal im Teilsatz basiert auf einer von einer Sequenz des bevorzugten Strahlreferenzsignals verschiedenen Sequenz; und
jedes Strahlreferenzsignal im Teilsatz der Mehrzahl von Strahlreferenzsignalen (402) unterscheidet sich zeitlich und frequenzmäßig vom bevorzugten Strahlreferenzsignal und jedem anderen Strahlreferenzsignal im Teilsatz von Strahlreferenzsignalen.

12. Verfahren (1100) nach einem der Ansprüche 10 bis 11, ferner umfassend:
Senden eines Satzes von Indizes (500) an die drahtlose Vorrichtung, wobei jeder Index im Satz von Indizes (500) mit einer der Strahlgruppen assoziiert ist, und
wobei das bevorzugte Strahlreferenzsignal und das mindestens eine Strahlreferenzsignal in der gleichen Strahlgruppe wie das bevorzugte Strahlreferenzsignal innerhalb einer jeweiligen Strahlgruppe indiziert werden.

13. Verfahren (1100) nach einem der Ansprüche 10 bis 12, ferner umfassend:
Senden einer Vorspannung, die beim Bestimmen des Teilsatzes von Strahlreferenzsignalen angelegt werden soll, an die drahtlose Vorrichtung, wobei die Vorspannung ausgewählt wird aus der Gruppe bestehend aus:
einer positiven Vorspannung, die angelegt wird, um eine Wahrscheinlichkeit zu erhöhen, dass jedes Strahlreferenzsignal innerhalb der jeweiligen Strahlgruppe, zu welcher das bevorzugte Strahlreferenzsignal gehört, als eine Beziehung mit dem bevorzugten Strahlreferenzsignals aufweisend identifiziert wird;
einer negativen Vorspannung, die angelegt wird, um eine Wahrscheinlichkeit zu verringern, dass jedes Strahlreferenzsignal innerhalb der jeweiligen Strahlgruppe, zu welcher das bevorzugte Strahlreferenzsignal gehört, als eine Beziehung mit dem bevorzugten Strahlreferenzsignals aufweisend identifiziert wird.

14. Netzwerkknoten (115) zum Senden von Kanalzustandsinformations-Referenzsignalen, wobei der Netzwerkknoten (115) umfasst:
einen Speicher (1030), der Anweisungen speichert; und
einen Prozessor (1020) in Kommunikation mit dem Speicher (1030), wobei der Prozessor (1020) so ausgelegt ist, dass er die Anweisungen ausführt, um den Prozessor (1020) zum Durchführen des Verfahrens nach einem der Ansprüche 10 bis 13 zu veranlassen.

## Revendications

1. Procédé (800), par un dispositif sans fil (110), de sélection de signaux de référence de faisceau pour une transmission de signaux de référence d'informations d'état de canal, le procédé comprenant :
la réception, en provenance d'un noeud de réseau (115) par l'intermédiaire d'une pluralité de faisceaux, d'une pluralité de signaux de référence de faisceau, BRS, (402), chaque signal de référence de faisceau étant associé à l'un d'une pluralité de groupes de faisceaux, et utilisant une séquence permettant une identification de son faisceau respectif, dans lequel chaque signal de référence de faisceau utilise une séquence différente de celle d'autres signaux de référence de faisceau à l'intérieur du même groupe de faisceaux ;
la réalisation, par le dispositif sans fil (110), de mesures sur la pluralité de signaux de référence de faisceau (402) ;
sur la base des mesures réalisées, la sélection d'un signal de référence de faisceau préféré parmi la pluralité de signaux de référence de faisceau (402) ;
l'identification d'un sous-ensemble de la pluralité de signaux de référence de faisceau qui sont dans le même groupe de faisceaux que le signal de référence de faisceau préféré ; et
la transmission, à destination du noeud de réseau (115), d'informations identifiant le sous-ensemble de la pluralité de signaux de référence de faisceau.

2. Procédé (800) selon la revendication 1, dans lequel :
la réalisation des mesures comprend la mesure d'une puissance reçue par BRS, BRSRP, pour chacun de la pluralité de signaux de référence de faisceau (402), et
le signal de référence de faisceau préféré a la plus grande valeur de BRSRP de la pluralité de signaux de référence de faisceau (402).

3. Procédé (800) selon l'une quelconque des revendications 1 et 2, dans lequel :
le signal de référence de faisceau préféré est d'une première séquence ; et
chaque signal de référence de faisceau dans le premier sous-ensemble de la pluralité de signaux de référence de faisceau (402) est basé sur une séquence différente d'une séquence du signal de référence de faisceau préféré.

4. Procédé (800) selon l'une quelconque des revendications 1 à 3, dans lequel chaque signal de référence de faisceau dans le sous-ensemble de la pluralité de signaux de référence de faisceau (402) diffère dans le temps et en fréquence du signal de référence de faisceau préféré et de chaque autre signal de référence de faisceau dans le sous-ensemble de signaux de référence de faisceau.

5. Procédé (800) selon l'une quelconque des revendications 1 à 4, comprenant en outre :
la réception, par le dispositif sans fil (110), d'un ensemble d'indices (500), dans lequel chaque indice dans l'ensemble d'indices (500) est associé à l'un des groupes de faisceaux ;
la détermination d'un groupe de faisceaux particulier auquel le signal de référence de faisceau préféré appartient ; et
l'identification du sous-ensemble de la pluralité de signaux de référence de faisceau à partir du groupe de faisceaux particulier auquel le signal de référence de faisceau préféré appartient.

6. Procédé (800) selon l'une quelconque des revendications 1 à 4, comprenant en outre :
la réception, par le dispositif sans fil (110), d'un ensemble d'indices (500), dans lequel chaque indice dans l'ensemble d'indices (500) est associé à l'un des groupes de faisceaux ;
la détermination d'un groupe de faisceaux particulier auquel le signal de référence de faisceau préféré appartient ; et
lors de l'identification du premier sous-ensemble de la pluralité de signaux de référence de faisceau, l'application d'une polarisation, dans lequel la polarisation est sélectionnée dans le groupe se composant de :
une polarisation positive appliquée pour augmenter une probabilité que chaque signal de référence de faisceau à l'intérieur du groupe de faisceaux particulier auquel le signal de référence de faisceau préféré appartient soit identifié comme ayant une relation avec le signal de référence de faisceau préféré ; et une polarisation négative appliquée pour réduire une probabilité que chaque signal de référence de faisceau à l'intérieur du groupe de faisceaux particulier auquel le signal de référence de faisceau préféré appartient soit identifié comme ayant une relation avec le signal de référence de faisceau préféré.

7. Procédé (800) selon la revendication 6, dans lequel la polarisation positive ou négative est reçue en provenance du noeud de réseau (115) par l'intermédiaire d'une signalisation RRC.

8. Procédé (800) selon la revendication 6, dans lequel la polarisation positive ou négative est préconfigurée dans le dispositif sans fil (110).

9. Dispositif sans fil (110) permettant de sélectionner des signaux de référence de faisceau pour une transmission de signaux de référence d'informations d'état de canal, le dispositif sans fil comprenant :
une mémoire (730) mémorisant une ou plusieurs relations entre une pluralité de signaux de référence de faisceau ;
un processeur (720) avec un accès à la mémoire (730), le processeur (720) étant utilisable pour effectuer le procédé selon l'une quelconque des revendications précédentes.

10. Procédé (1100), par un noeud de réseau (115), de transmission de signaux de référence d'informations d'état de canal, le procédé comprenant :
la transmission, à destination d'un dispositif sans fil (110), d'une pluralité de signaux de référence de faisceau (402) par l'intermédiaire d'une pluralité de faisceaux, chaque signal de référence de faisceau étant associé à l'un d'une pluralité de groupes de faisceaux, et utilisant une séquence permettant une identification de son faisceau respectif, dans lequel chaque signal de référence de faisceau utilise une séquence différente de celle d'autres signaux de référence de faisceau à l'intérieur du même groupe de faisceaux ;
la réception, en provenance du dispositif sans fil (110), d'informations identifiant un sous-ensemble de signaux de référence de faisceau, le sous-ensemble comprenant :
un signal de référence de faisceau préféré ; et
au moins un signal de référence de faisceau dans le même groupe de faisceaux que le signal de référence de faisceau préféré ;
pour chaque signal de référence de faisceau dans le sous-ensemble de signaux de référence de faisceau, la transmission, à destination du dispositif sans fil (110), d'un signal de référence d'informations d'état de canal associé.

11. Procédé (1100) selon la revendication 10, dans lequel :
le signal de référence de faisceau préféré a la plus grande valeur de puissance reçue par signal de référence de faisceau de la pluralité de signaux de référence de faisceau (402) ; et
au moins l'une des conditions suivantes est remplie :
l'au moins un signal de référence de faisceau dans le même groupe de faisceaux que le signal de référence de faisceau préféré dans le sous-ensemble est basé sur une séquence différente d'une séquence du signal de référence de faisceau préféré ; et
chaque signal de référence de faisceau dans le sous-ensemble de la pluralité de signaux de référence de faisceau (402) diffère dans le temps et en fréquence du signal de référence de faisceau préféré et de chaque autre signal de référence de faisceau dans le sous-ensemble de signaux de référence de faisceau.

12. Procédé (1100) selon l'une quelconque des revendications 10 et 11, comprenant en outre :
la transmission, à destination du dispositif sans fil, d'un ensemble d'indices (500), dans lequel chaque indice dans l'ensemble d'indices (500) est associé à l'un des groupes de faisceaux, et
dans lequel le signal de référence de faisceau préféré et l'au moins un signal de référence de faisceau dans le même groupe de faisceaux que le signal de référence de faisceau préféré sont indexés à l'intérieur d'un groupe de faisceaux particulier.

13. Procédé (1100) selon l'une quelconque des revendications 10 à 12, comprenant en outre :
la transmission, à destination du dispositif sans fil (110), d'une polarisation à appliquer à la détermination du sous-ensemble de signaux de référence de faisceau, dans lequel la polarisation est sélectionnée dans le groupe se composant de :
une polarisation positive qui est appliquée pour augmenter une probabilité que chaque signal de référence de faisceau à l'intérieur du groupe de faisceaux particulier auquel le signal de référence de faisceau préféré appartient soit identifié comme ayant une relation avec le signal de référence de faisceau préféré ; et
une polarisation négative qui est appliquée pour réduire une probabilité que chaque signal de référence de faisceau à l'intérieur du groupe de faisceaux particulier auquel le signal de référence de faisceau préféré appartient soit identifié comme ayant une relation avec le signal de référence de faisceau préféré.

14. Noeud de réseau (115) permettant de transmettre des signaux de référence d'informations d'état de canal, le noeud de réseau (115) comprenant :
une mémoire (1030) mémorisant des instructions ; et
un processeur (1020) en communication avec la mémoire (1030), le processeur (1020) étant utilisable pour exécuter les instructions pour amener le processeur (1020) à effectuer le procédé selon l'une quelconque des revendications 10 à 13.
